# EUROPEAN PATENT APPLICATION

(11) **EP 1 049 057 A2**
(43) Date of publication of application: **02.11.2000**
(21) Application number: 00108096.9
(22) Date of filing: 26.04.2000
(51) Int. Cl.: G07F 19/00, G06F 17/60

(54) **Method and system for tunneling messages through routing and settlement systems of a financial institution**

(30) Priority: 26.04.1999 US 131066 P
(71) Applicant: Citishare Corporation, New York, New York 11120 (US); CITIBANK, N.A., New York, New York 10043 (US)
(72) Inventor: Zahorik, Gordon W., Southhampton, New Jersey 08088 (US); Downing, John, Old Windsor, Berks SL4 2PT (GB)
(74) Representative: Beetz & Partner Patentanwälte

(57) **Abstract**

Methods and systems for communicating in a financial network are provided that employ a private data field (44) in a financial transaction message (40). Such messages are transmitted through a routing system of a financial institution, such as a routing and settlement system (6) of a financial institution and electronic funds transfer (EFT) infrastructure. One such method provides a customer (2) of a home bank with a home bank terminal interface experience at a remote transaction terminal (4). Interface data associated with a home bank terminal (10) is communicated to the remote transaction terminal (4) through a routing and settlement system (6) of a financial institution. In another such method, encrypted customer data is sent by a web merchant site (54) to a financial institution via EFT infrastructure (52) in a private data field (44) of a financial transaction message (40) after the merchant site (54) receives the encrypted customer data from the customer (2) during an internet transaction assisted by an applet provided by the financial institution.

## Description

### Cross Reference to Related Application

This patent application claims priority to applicants' co-pending United States Provisional Patent Application Serial No. 60/131,066, entitled "A Method and System for Tunneling Messages Through Routing and Settlement Systems of a Financial Institution," filed April 26, 1999, which is hereby incorporated in full by reference.

### Field of the Invention

The present invention relates to Electronic Funds Transfer (EFT) and related transactions. In particular, the present invention relates to tunneling messages related to financial transactions through EFT routing and settlement systems such that a remote terminal interface may operate according to the home bank terminal interface of a customer or such that private data may be passed between a financial institution and a customer during an internet transaction with a web merchant.

### Background

Conventionally, there is no rigid standard to which financial institutions conform in providing interfaces to customers using the institution's interface terminals. For example, a first automatic teller machine (ATM) of a bank in one country provides a certain interface, for example a certain graphical interface, options, button placement, and order of script. An ATM of the bank in a different country may provide a different interface. For example, the graphical interface, options, button placement, language used, order of script, and other aspects may be different from that of the first ATM. Also, conventionally, when a customer of a first bank uses an ATM provided by a second bank, the customer must use the interface provided by the second bank.

A bank's customers generally become accustomed to a particular interface provided by the bank, and may not be familiar with the interface provided in another location or by another bank. As a result, an unfamiliar interface makes it more difficult for the customer to carry out transactions. Also, the customer's unfamiliarity with an interface increases the chance that the customer will undertake an erroneous transaction.

Moreover, the transaction takes more time, in that the customer must familiarize himself or herself with the unfamiliar interface during the transaction. Also, the resulting unfamiliarity causes the customer to purposefully slow the customer's transaction. This delay is disadvantageous to the customer in that the customer wishes to complete the transaction as quickly as possible in order to spend time on other activities. The delay is also disadvantageous to the institution providing the unfamiliar terminal in that the customer's delay causes other of the institution's customers to wait longer in line and otherwise delays other persons. In addition, the resulting increase in erroneous transactions causes the customer and person(s) associated with the bank(s) to spend time and resources correcting such erroneous transactions.

Further, conventional methods and systems do not provide a touch point to the customer's bank at remote terminals that has the same look and feel to the bank's customers as the bank's home terminals. Such methods and systems do not provide a continuous and familiar experience to the customer when conducting financial transactions.

Also, conventional systems do not provide an effective and efficient means for transmitting encrypted, private data between a customer of a financial institution and the financial institution in association with a internet transaction at a web merchant site such that the web merchant site does not have access to the private data. In particular, conventional systems do not provide such means that may be easily employed with existing routing systems (e.g., existing EFT infrastructure).

It is desirable to provide a method and system for providing a customer of a home bank with a home bank terminal interface experience at a remote transaction terminal. It is further desirable to provide a method and system for effectively and efficiently transmitting encrypted, private data between a customer and an institution in association with a internet transaction in a secure environment that may be used with existing communications systems. It is desirable to provide methods and systems that do not have the disadvantages that are described above that are associated with conventional systems, and that provides further advantages.

### Summary

Embodiments of the present invention include methods and systems for communicating private data in a financial network. In one embodiment, a financial transaction message comprising a financial transaction data field and a private data field, which includes private customer information, is transmitted through a routing system of a financial institution. Examples of routing systems includes a routing and settlement system of a financial institution and electronic funds transfer (EFT) infrastructure.

Embodiments also include a financial transaction message comprising a financial transaction data field and a private data field, wherein the private data field comprises customer information. The message may comprise an ISO 8583 standard format message, and the private data field may comprise an extended field of the message.

Embodiments of the present invention also include methods and systems for tunneling messages through routing and settlement systems of a financial institution. In one embodiment, the invention provides a method for providing a customer of a home bank with a home bank terminal interface experience at a remote transaction terminal. An example of a remote transaction terminal is an ATM that is geographically remote from the home bank.

An embodiment of the present invention may include receiving home bank customer identification data at a remote transaction terminal, such as an ATM. Such receiving may be accomplished by reading the customer's ATM card, for example. Next, a home bank server associated with the customer identification data is determined by, for example, consulting a database having home bank server address data. Home transaction terminal interface data is then requested from the home bank server, which sends such data. Embodiments of such data may include data describing the graphical user interface of the home bank terminal interface, such as a home bank ATM interface. In an embodiment, the home transaction terminal interface data may be included in a private field of an ISO 8583 message, along with financial transaction data in another field. Such home transaction terminal interface data may also include biometrics data associated with the home bank customer. Such data may also include data regarding menu options, button placement, language used, order and content of script, and other aspects of terminal interface.

The request and sending of such data may comprise communicating with the home bank server through a routing and settlement system of a financial institution. The request, the data itself, or both, may be encrypted. The home transaction terminal interface data is received, and an interface according to the home terminal interface data is provided to a customer at the remote terminal.

Another embodiment of the present invention comprises a method for communicating messages for a customer between a remote transaction terminal and a home data center of a financial institution. In such an embodiment, customer information from the customer at the remote transaction terminal may be received, and then used to automatically identify the customer and a location of a home data center storing data relating to a home transaction terminal interface for the customer. Once the location of a home data center is identified, the identifying information for the customer from the remote transaction terminal is automatically transported to the home data center through a routing and settlement system of the financial institution. The server or other system associated with the home data center then automatically transports a message relating to the home transaction terminal interface data for the customer from the home data center to the remote transaction terminal through the routing and settlement system, wherein the message includes financial data and generic data for the customer.

In such an embodiment, the automatic transporting of a message relating to the home transaction terminal interface data for the customer from the home data center to the remote transaction terminal through the routing and settlement system may employ an ISO 8583 protocol containing a private data field. Moreover, in an embodiment, the message protocol may be used to transport the financial data, and the private data field used to transport the generic data.

Other embodiments include methods and system for communicating private data between a financial institution and a customer of the financial institution in an internet-based transaction. In one such embodiment, a financial institution provides a control applet to a web merchant site and provides a means for providing internet payments capable of communicating with a computer network (such as the internet) to a customer of the financial institution. The means for providing internet payments may comprise a wide variety of hardware capable of carrying out such a function. Examples include a smart card, smart card reader, personal computer, ATM card, and ATM card reader.

The customer visits the web merchant site and the web site merchant provides the control applet to the customer's internet browser. The control applet prompts the customer for payment and other customer information when the customer indicates the customer has selected goods or services for purchase from the merchant site is ready to finalize payment.

In the embodiment, the customer sends the customer information, in an encrypted state, to the merchant site. The merchant site does not have the means to un-encrypt the customer information. The merchant site sends the customer information to the financial institution through EFT infrastructure using an ISO 8583 standard message that includes a private data field containing the customer information. The financial institution receives the message from the web merchant site. The financial institution has the means to un-encrypt the customer data in the private data field.

Embodiments of the present invention provide various desirable features and advantages. Embodiments of the present invention provide methods and systems for providing a customer of a home bank with a home bank terminal interface experience at a remote transaction terminal. One feature of embodiments of the present invention is that users (e.g., bank customers) are provided with a familiar interface at remote terminals. Thus, transactions at the remote terminal are easier for the customer to carry out than with unfamiliar interfaces. Moreover, due to this familiarity, the chance that the customer will undertake an erroneous transaction at the remote terminal is decreased.

Another advantage is that transactions at remote terminals are accomplished more quickly because, for example, the customer does not need to familiarize himself or herself with the remote terminal's interface during the transaction. The reduction of delay due to unfamiliarity is advantageous to the customer in that the customer wishes to complete the transaction as quickly as possible in order to spend time on other activities, and is advantageous to the institution operating the remote terminal in that others do not have to wait as long for the customer to familiarize himself or herself with the terminal. In addition, the lessening of erroneous transactions due to unfamiliarity with the interface causes the customer, the customer's home institution, and the operator of the remote terminal to spend less time and resources correcting erroneous transactions.

Another advantage of embodiments according to the present invention is that a touch point to the customer's institution (e.g., a bank) is provided at remote terminals that has the same look and feel to the bank's customers as the customers' home terminals. Such embodiments help to build loyalty, and provide a continuous and familiar experience to the customer when conducting transactions.

A further feature of embodiments according to the present invention is that messages may be tunneled through routing and settlements systems throughout the world. Thus, customers may be provided with a familiar interface (e.g., with the same language, scripting, and look and feel as the interface normally used by the customer) at interfaces throughout the world. A still further feature of embodiments of the present invention is that transaction protocols may be used to lessen data transfer overhead. A still further feature of embodiments of the present invention is that biometric and similar data may be communicated to the remote terminal, and the data provided may be encrypted.

Another advantage of embodiments of the present invention allows companies is that embodiments allow institutions, such as financial institutions, to quickly introduce new products that require communication with the institution using existing communications infrastructure. Another advantage is that embodiments of the present invention may be used without altering the existing communications infrastructure use to transport information.

Another advantage is that embodiments of the present invention facilitates secure payments and communication by customers to a financial institution and promotes confidence in such payments and communication. A related advantage of the present invention is that embodiments may be used to authenticate customers, merchants, and financial institutions in order to prevent fraud.

Another advantage of the present invention is that embodiments may used in association with a variety of media, including the internet. A still further advantage of the present invention is that, in embodiments, existing EFT infrastructure can be used to transport private customer data relating to a customer of a financial institution that is unique to the customer and the financial institution and that is accessible only by the customer and the financial institution.

Another advantage of the present invention is that embodiments allow a private and secure conversation between a financial institution and a customer of the financial institution to take place via existing EFT infrastructure in various settings, such as during customer's transaction with a merchant site. Such advantage allows various financial institutions to implement various customer dialogs as desired or needed by the financial institution (and their products) while sharing a common EFT infrastructure.

Those of ordinary skill in the art will appreciate the advantages and features of the present invention as described above and as is apparent from the detailed description below.

### Brief Description of Drawings

Figure 1 shows a schematic overview of an embodiment of the present invention;
Figure 2 shows a schematic overview of an alternative embodiment of the present invention;
Figure 3 shows a flow diagram of steps associates with an embodiment of the present invention;
Figure 4 shows a graphical representation of a data structure used in accordance with an embodiment of the present invention; and
Figure 5 shows a schematic overview of another embodiment of the present invention.

### Detailed Description

Embodiments of the present invention include methods and systems for tunneling messages through routing and settlement systems of a financial institution. Embodiments of the present invention include methods and systems for providing a customer of a home bank with a home bank terminal interface experience at a remote transaction terminal by tunneling messages though a routing and settlement system of a financial institution. Further description of embodiments of the present invention is provided below by way of example embodiments with reference to the figures provided.

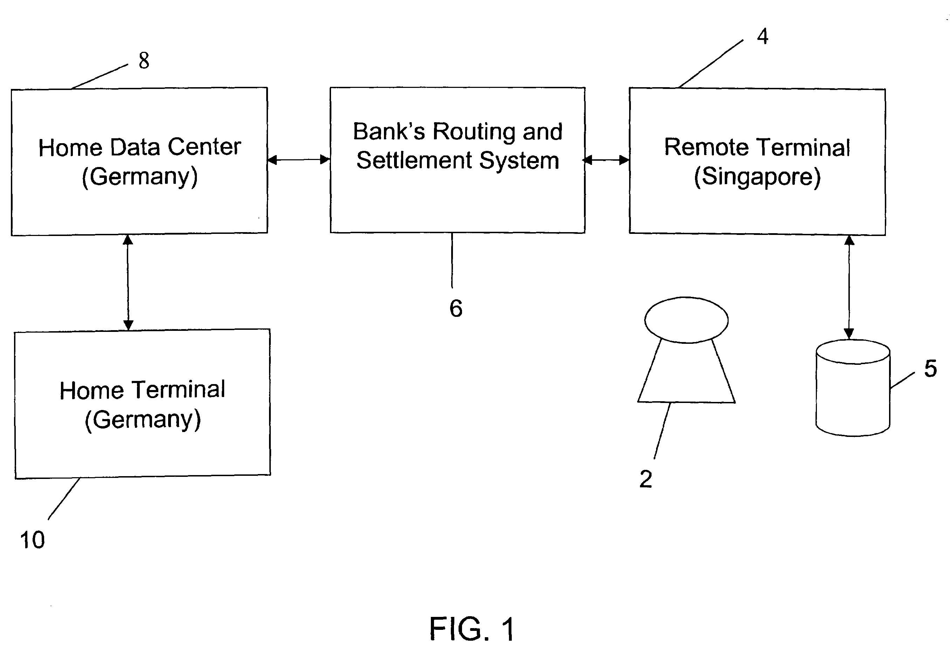

Referring to FIG. 1, an embodiment of the present invention is shown. The embodiment includes a remote transaction terminal 4 in Singapore. In the embodiment, the remote terminal 4 comprises an ATM. Other types of transaction terminals, such as a telephone or a personal computer terminal, may be used in accordance with the present invention as well.

A home transaction terminal 10 in Germany is also shown. In the embodiment shown, the home terminal 10 is an ATM. The home terminal 10 is associated with a home bank of a customer 2 (such as the customer's local branch bank). It is also associated with a home data center 8, which is also associated with the customer's home bank. The home terminal 10 shown is the ATM which the home bank customer 2 normally uses while at home in Germany, but other terminals may be designated the home terminal associated with the customer if desired, and this designation may be made by the home bank, the customer 2, or other person or entity.

A remote terminal is generally a terminal that is different from the home terminal of the bank customer. The remote terminal includes a card reader for reading data from bank cards and the like. The remote terminal may be geographically distant from the home terminal of the bank customer, whether of great geographic distance as is the embodiment shown in FIG. 1 (Germany and Singapore) or relatively little geographic distance, such as in the same town or city. In the embodiment shown, the remote terminal 4 is associated with the home bank in that it is part of the same, global financial institution. In other embodiments, however, the remote terminal 4 may be associated with a different institution.

The home data center 8 shown in FIG. 1 is the data center associated with the home bank of the customer 2. Data regarding the home terminal, the home bank customer, and related data is housed at the data center 8. Data housed at the data center 8 includes data regarding the interface of the home terminal 10 (home transaction terminal interface data), such as data indicating matters such as the text of the various screens available, configuration of the response buttons, graphical layout of an ATM screen, the order of questions, the questions themselves, the buttons pushed to answer the questions, the script, order of questions, and organization of the screens. The home transaction terminal interface data is associated with certain customer identification data. The customer identification data (e.g., account number) may be used to identify (or determine) the home transaction terminal interface data associated with a particular customer. For example, a particular customer's account number is associated in the database with particular home transaction terminal interface data, and that home transaction terminal interface data reflects the interface of that customer's home terminal 10.

Data regarding the home bank customer 2 also includes account information (e.g., account numbers) as well as biometrics data about the customer. Biometrics data includes data regarding the physical characteristics of the customer. Examples include retinal scan data, finger print data, and related data.

The center 8 shown includes a data server and a database for managing, communicating, and storing data. The home data center 8 shown, like the home terminal 10, is located in Germany, but the home terminal and home data center in other embodiments may be more geographically distinct if desired. The home data center 8 is in communication with the home terminal 10, and provides the home terminal 10 with the data needed to provide an interface to customers.

The embodiment shown comprises portions of a global bank. In other embodiments, the portions may be part of separate banks, and communication may take place using the separate banks' routing and settlement systems or using other communications means. For example, in other embodiments, the home terminal 10 may be associated with a first bank and the remote terminal 4 associated with a second, unrelated bank.

The bank's routing and settlement system 6 is shown in FIG. 1. Those of ordinary skill in the art are familiar with the routing and settlement systems of financial institutions. The system comprises a computerized communication network, and manages debits and credits for the bank, including settling transactions. The routing and settlement system 6 is the system used by the home bank to route data regarding financial transactions and other matters, and to settle transactions. Those of ordinary skill in the art will recognize that the routing and settlement system 6 of a financial institution is just one example of a data communication system that may be used in accordance with the present invention. Other systems, such as the internet, may be used.

In the embodiment shown in FIG. 1, the home data center 8 and the remote terminal 4 are in communication with the bank's routing and settlement system 6. Communication, such as data transfer, may pass through the bank's routing and settlement system between the remote terminal 4 and the home data center 8 by way of messages or other means.

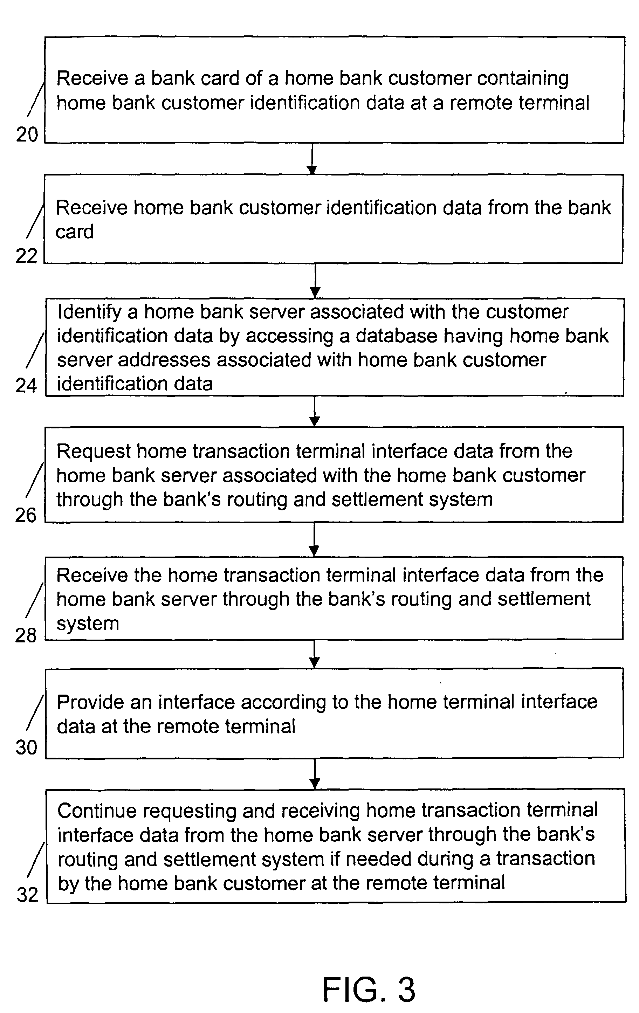

An example of steps undertaken by the system shown in FIG. 1 in accordance with the present invention is shown in FIG. 3 and discussed herein with reference to FIG. 3 and to FIG. 1. Those of ordinary skill in the art will recognize that FIG. 3 and the discussion herein provides an example of steps, and that other steps and configurations may be used in accordance with the present invention.

A home bank customer 2 associated with a German bank that normally uses the customer's home ATM 10 in Germany approaches an ATM system 4 in Singapore. The customer 2 provides the remote ATM system 4 with the customer's bank card. Referring to FIG. 3, the ATM 4 receives the bank card of the home bank customer 20. The bank card includes home bank customer information, such as home bank customer identification data. Examples of home bank customer identification data include a bank card number.

The ATM system 4 automatically detects and receives the home bank customer identification data from the bank card 22. In other embodiments, customer information may be input at the remote terminal 4 by the customer or another person.

In the embodiment shown, the ATM system 4 automatically (without, for example, further prompting by the customer or other prompting) identifies the location of a home data center having data relating to a home transaction terminal interface for the customer. The ATM system 4 does so by accessing and querying a database 5 associated with the ATM 4. The database 5 includes home bank server addresses associated with customer identification data. Specifically, the database 5 includes the home bank server address associated with the customer identification data of the customer 2. By accessing this database, the system determines the address (or location) of a home bank server associated with the customer identification data 24. In other embodiments, the determination of the address of a home data center associated with a customer is carried out by bank's routing and settlement system 6 when provided with customer identification data by the ATM system 4.

Referring to FIG. 1 and FIG. 3, once the home bank server address is determined, the ATM system 4 requests home transaction terminal interface data from the home bank server 8 associated with the home bank customer 2 through routing and settlement system 6 of the bank 26. In doing so, the ATM system 4 sends (or transports or transmits) the request along with the customer identification data received from the inserted bank card. This transmittal of data is encrypted, as is, preferably, all transmittal of data through the routing and settlement system 6 when using embodiments of the present invention.

The home bank center 8 includes a home data server. Once the server 8 receives the request from the ATM system 4, the server determines the home transaction terminal interface data associated with the home bank customer 2 by, for example, querying a database (not shown) associated with the server that includes home transaction terminal interface data correlated with customer identification data. For example, after receiving the customer identification data from the ATM system 4, the server uses the customer identification data to query a database to determine the home transaction terminal interface data associated with that particular customer identification data. In the embodiment shown, such home transaction terminal interface data includes data for displaying German-language ATM screens identical to those displayed on the home ATM associated with the customer 2. Once the server makes this determination, the home transaction terminal interface data associated with the customer 2 is sent to the ATM system 4 in Singapore via the bank's routing and settlement system 6, where it is received 28.

Once the remote ATM system 4 receives the home transaction terminal interface data via the bank's routing and settlement system 6, the ATM system 4 provides an interface to the customer 2 according to the data 30. For example, the ATM system 4 in Singapore uses the home transaction terminal interface data to display to the customer 2 German-language ATM screens identical to those displayed on the home ATM associated with the customer on the graphical user interface of the ATM system 4 in Singapore. The system 4 displays an interface identical to the look and feel of the interface with which the customer 2 has become accustomed, the interface of the customer's home terminal 10.

In the embodiment shown, the ATM system 4 continues requesting and receiving home transaction terminal interface data (i.e., a conversation) from the home bank server 8 through the bank's routing and settlement system 6 during the transaction by the customer 2 at the remote terminal 32. For example, the ATM system 4 may request and receive further ATM-screen data, button-location data, and other home transaction terminal interface data. account balance data, previous-transaction data.

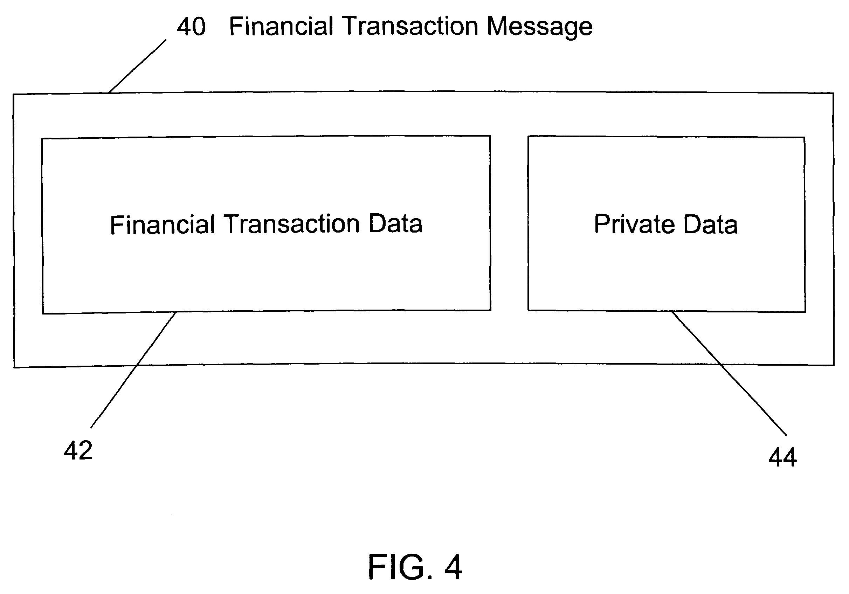

In the embodiment shown, the home transaction terminal interface data is included, or embedded, in a in a private data field of a financial transaction message using the ISO8583 message protocol. An example is shown in FIG. 4. Referring to FIG. 4, the financial transaction message 40 shown is in the ISO8583 message protocol and includes financial transaction data 42 and private data 44. A private message (or private data) field 44 that is, for example, 4000 bytes, is included in the message 40. The private data field 44 in the embodiment shown is a field in which data (such as data describing the graphical user interface normally used by the customer) may be placed that may not be necessary for the financial transaction itself. In the embodiment shown, the private data field includes home transaction terminal interface data. Thus, the home transaction terminal interface data may be included as part of the messages sent between the ATM system 4 and the home bank systems in relation to the home bank customer's transaction or in relation to other transactions. The financial transaction field 42 includes data relating to the financial transaction itself (e.g., customer identification, requested transaction, account balance). Essentially, the private data field 44 allows data, such as home transaction terminal interface data, to be tunneled to the remote terminal for use. In an embodiment, the private data field comprises an extension of the standard ISO 8583 protocol (e.g., a 4000 byte extension).

Although the shown embodiment uses the ISO8583 protocol, other message protocols may be used, and in other embodiments, the home terminal interface data and other data may be sent separate from the financial transaction data. Moreover, other types of data may be included in the private data field, such as biometrics data. In addition, in other embodiments, the home transaction terminal interface data may be sent separately from the financial transaction data.

Moreover, in the embodiment shown, generic data is used to reflect the interface. That is, data reflecting the make-up of the interface with a customer in a standard display language is used, which allows a system to construct a graphical interface An example of such a standard in embodiments includes HTML. In another embodiment, the interface data may include the graphical images themselves for use in an interface.

In another embodiment, other data regarding the home bank customer 2 is transported in the private field as well. Biometrics data may be transported to the ATM system 4 in the private data field. Such data would allow the ATM system to examine the biometrics data of the person representing themselves as the customer in relation to the data recorded by the customer's home bank. For example, the ATM system 4 may request and receive data regarding a retinal scan of the customer, and compare that data with a retinal scan of the person representing themselves as the customer 2.

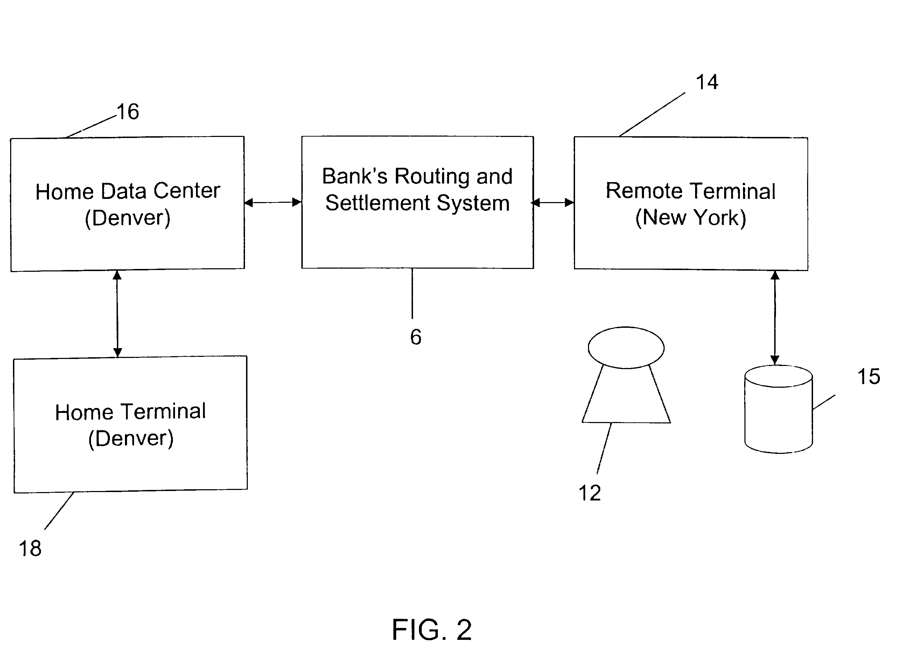

Of course, the present invention may be used in systems besides standard ATM transactions. For example, referring to FIG. 2, stored-value transactions, such as loading stored value on the microchip of a stored-value smart card, may be undertaken in accordance with the present invention. FIG. 2 shows a remote terminal 14 in the form of an ATM in New York, New York. The remote terminal 14 is associated with a database 15, and the remote terminal 14 is capable of carrying out smart card transactions. The remote terminal 14 is in communication with a bank routing and settlement system 6, which is in turn in communication with a home data system 16 in Denver, Colorado. The home data system 16 is in communication with a home terminal 18 in Denver, in this case an ATM capable of carrying out smart card transactions. A smart card having a microchip sufficient to record a stored value may be used with embodiments of the present invention. For example, when a customer 12 provides the customer's smart card to a remote terminal 14, such as one in New York, the terminal 14 reads the customer identification on the smart card and communicates with the home data system 16 associated with the customer through the bank's routing and settlement system 6, requesting and receiving home transaction terminal interface data substantially as described above.

In the embodiment shown in FIG. 2, home transaction terminal interface data may be provided in the private data field which allows a remote terminal to interact with the customer 12 in the same manner that the home terminal associated with the customer 18 (e.g., in Denver) interacts with the customer 12 in relation to the customer's smart card. For example, interface data is provided in the private data field that allows for the loading of data representing value onto the smart-card microchip in communication with the remote terminal in exactly the same way that would be done by the customer's home terminal 18.

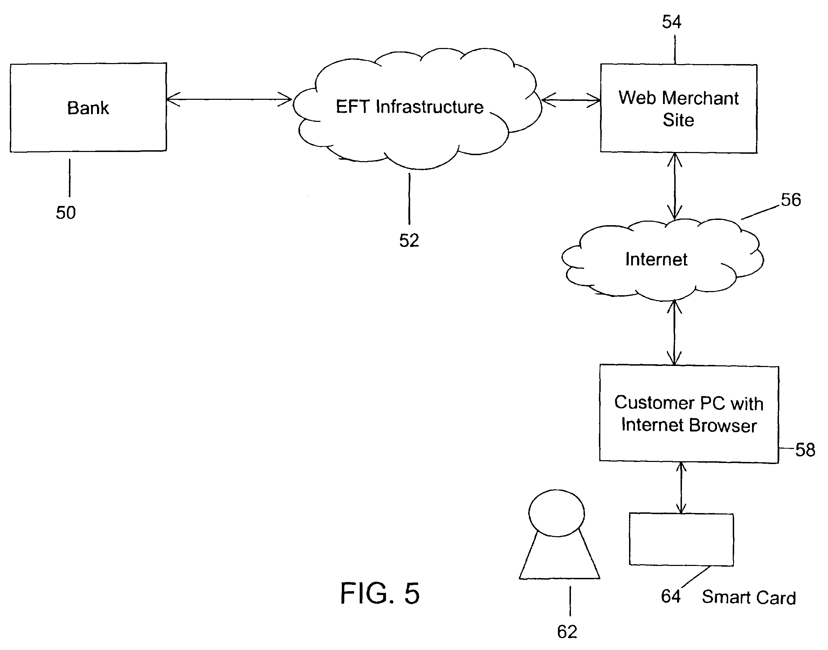

FIG. 5 shows another embodiment of the present invention. In FIG. 5, a bank customer's personal computer (PC) 58, which includes a web browser such as Microsoft Internet Explorer or Netscape Navigator, is connected to the internet 56. A web merchant site 54 (or web merchant server) is also connected to the Internet 56. Although not shown, many merchant sites are connected to the internet. The web merchant site 54 shown comprises an Internet site at which the merchant offers goods and services for sale and accepts orders and payments for those goods and services from Internet users who access the site 54 via the internet 56. The merchant site includes multiple web pages displaying goods and services for sale. The web merchant site 54 is also in communication with the Electronic Funds Transfer (EFT) infrastructure 52 associated with a bank 50. Those of ordinary skill in the art are familiar with such EFT infrastructure. Examples include a bank's routing and settlement system and other networked communications or computer systems. The bank 50 is in communication with the EFT infrastructure 52 as well.

The bank 50 provides a customer 62 with a means for providing internet payments 64. Examples of such means for providing internet payments include secure tokens and secure token systems, such as a smart card and smart-card reader, computer, ATM card and ATM card reader, or other, similar hardware. In the embodiment shown, the means for providing internet payments is a smart card. This means for providing internet payments 64 is in communication with the customer's PC 58. For example, the PC 58 shown includes a smart-card reader (not shown), which receives the smart card 64.

The bank 50 also creates a control applet. The control applet described herein comprises an application program that is relatively small in size and that is sent to a user, and is often sent along with a web page. The applet is designed to be executed from within another application (e.g., a web browser). An applet is generally capable of performing interactive animations, immediate calculations, and other tasks, generally without having to send a user request back to a server. It is written in a language such as Java.

The control applet used in the embodiment shown in FIG. 5 is designed to control the dialogue between the merchant site 54 and the customer 62 through the customer's browser on the customer's PC 58 via the internet 56. The control applet is programmed to communicate with the means for providing Internet payments 64 in communication with the customer's PC 58.

The bank 50 provides the control applet to the merchant site 54. Indeed, the bank 50 may provide the applet to all merchant sites that wish to sell products or services (or provide products or services) to the customer 62 and other customers of the bank 50. The bank 50 does so with the appropriate controls, such as encryption and confidentiality guarantees.

The customer 62 uses the internet browser on the customer's PC 58 to visit the merchant site 54 by typing in the merchant site's web address into the address line of the browser or by otherwise pointing the user's browser to the merchant site (such as by activating a link). The customer 62 uses the customer's browser to select goods and services offered for sale by the merchant on the merchant site 54. For example, the customer 62 may use an electronic shopping cart to select goods and services for purchase.

Once the customer 62 selects goods and services that the customer wishes to purchase, the customer indicates to the merchant site 54 that the customer is ready to complete payment. For example, the customer 62 may activate a "Ready to Check Out" button displayed on a web page associated with the merchant site 54. The merchant site determines that the customer 50 is associated with the bank 50 by, for example, detecting a cookie on the customer's PC 58 that so indicates. In other embodiments, the merchant site 54 identifies the customer 50 as a customer of the bank 50 by requesting a user name and password which so indicates, by asking the customer to indicate whether or not the customer is a customer of the bank, or by other means.

When the merchant site 54 detects that the customer 62 is ready to complete payment, the merchant site 54 sends the control applet to the customer's PC 58 to interact with (or run within) the internet browser residing on the customer's PC 58. In other embodiments, the control applet may be sent to the customer's PC beforehand. The control applet has been programmed by the bank 50 to, when executed, allow the customer 62 to provide private customer information using the customer's browser that will be given to the bank 50, but not to the merchant site 54. Examples of such customer information includes the customer's credit card number, debit card number, bank account number, PIN number, and account balance. In the embodiment shown, the applet requests and receives private customer information from the smart card 64.

The smart card 64 includes private customer information in the form of a smart-card account number and current balance available thereon. In other embodiments, such private customer information may be provided by the customer 62 by typing in such information into a web-based form, requesting and receiving such information from the customer's electronic wallet, requesting and receiving such information from hardware provided to the customer 62 by the bank 50 that is in communication with the customer's PC 58, or by other means.

The private customer information is secured (e.g., encrypted) and transmitted to the merchant site 54 via the internet 56 as part of the purchase transaction by function of the applet. In the embodiment shown, the merchant site 54 is unable to read the private customer information received by it. A variety of encryption standards may be used to encrypt the private customer information for transmittal to the merchant site 54. For example, Secure Sockets Layer (SSL) or other protocol using a private key may be used. In the embodiment shown in FIG. 5, the merchant site 54 is not provided with the key or other means to read the private customer data sent to it.

After the merchant site 54 receives the private customer information and the other data associated with the transaction (e.g., the customer's shipping address, identification number of the goods and services ordered, and the customer's e-mail address), the merchant processes the payment using the EFT infrastructure 52 to which the merchant site 54 is connected. For example, the merchant uses the EFT infrastructure 52 to request payment from the smart card account of the customer 62 maintained by the bank 50. In the embodiment shown, the EFT infrastructure 52 comprises the existing, conventional EFT infrastructure used to carry out payment processes.

With reference to FIG. 4, the financial transaction message 40 sent by the merchant site 54 to the bank 50 comprises an ISO 8583 message with financial transaction data 42 and private data 44. The private data 44 comprises the private customer information from the smart card 64. The financial transaction data 42 comprises the standard data needed to carry out the request to the bank 50 for payment and the receipt from the bank of payment to the merchant.

The bank 50 receives the financial transaction message 40 and completes the payment transaction based on both the usual EFT data provided in the financial transaction data field 42 and the private customer information provided in the private data field 44. The bank 50 has a key or other means to un-encrypt and otherwise read the customer information in the private data field. In embodiments, the bank 50 may transmit private data to the customer 62 by sending a message that includes private data in the private data field to the merchant site 54 through the EFT infrastructure 52 with embedded instructions to transmit the message to the customer's PC 58. The message is encrypted such that the merchant site 54 cannot read the private data. The customer's PC includes a key sufficient to un-encrypt the private data. In the embodiment shown, the merchant web site 54 does not possess such a key.

Various embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention.

## Claims

1. A method for providing a customer (2, 12) of a home bank with a home bank terminal interface experience at a remote transaction terminal (4, 14):
receiving customer identification data at the remote transaction terminal (4, 14);
identifying a server associated with the customer identification data;
requesting home transaction terminal interface data from the server;
receiving the home transaction terminal interface data from the server; and providing an interface according to the home terminal interface data at the remote terminal (4, 14).

2. The method of claim 1, wherein requesting home terminal interface data from the server comprises communicating with the server through a routing system (6).

3. The method of claim 2, wherein requesting home terminal interface data from the server further comprises communicating with the server through a settlement system.

4. The method of claim 3, wherein the settlement system comprises a financial institution settlement system.

5. The method of claim 4, wherein the remote terminal (4, 14) comprises a terminal geographically remote from the home bank.

6. The method of claim 4, wherein the remote terminal (4, 14) comprises an ATM.

7. The method of claim 4, wherein receiving the home transaction terminal interface data from the server comprises receiving a financial transaction message (40) comprising the home transaction terminal interface data.

8. The method of claim 7, wherein the financial transaction message (40) further comprises financial transaction data (42).

9. The method of claim 8, wherein the financial transaction message (40) comprises a private data field (44), wherein the private data field (44) contains the home transaction terminal interface data.

10. The method of claim 8, wherein the financial transaction data comprises data relating to a financial transaction requested by the customer (2, 12).

11. The method of claim 8, wherein a plurality of the financial transaction messages (40) are received.

12. The method of claim 6, wherein the home transaction terminal interface data comprises data describing the graphical user interface of the home bank terminal interface.

13. The method of claim 6, wherein the home bank terminal interface comprises a home bank ATM interface.

14. The method of claim 6, wherein the home transaction terminal interface data comprises biometrics data associated with the customer (2, 12).

15. The method of claim 6, further comprising encrypting the home transaction terminal interface data.

16. The method of claim 4, wherein the remote terminal comprises a terminal capable of carrying out smart card transactions.

17. The method of claim 8, wherein the financial transaction message (40) comprises a message in the ISO8583 standard format.

18. The method of claim 4, wherein receiving customer identification data at the remote transaction terminal comprises receiving home bank customer identification data.

19. The method of claim 4, wherein the server is associated with the home bank.

20. A method for communicating messages for a customer (2, 12) between a remote transaction terminal and a home data center (8, 16) of a financial institution, comprising:
receiving customer information from the customer (2, 12) at the remote transaction terminal (4, 14);
automatically identifying the customer (2, 12) and a location of a home data center (8, 16) storing data relating to a home transaction terminal interface for the customer (2, 12) from the customer information;
automatically transporting identifying information for the customer (2, 12) from the remote transaction terminal to the home data center (8, 16) through a routing and settlement system (6) of the financial institution;
automatically transporting a message relating to the home transaction terminal interface data for the customer (2, 12) from the home data center (8, 16) to the remote transaction terminal (4, 14) through the routing and settlement system (6), wherein the message includes financial data and generic data for the customer (2, 12).

21. The method of claim 20, wherein the step of automatically transporting a message relating to the home transaction terminal interface data for the customer (2, 12) from the home data center (8, 16) to the remote transaction terminal through the routing and settlement system (6) employs an ISO 8583 protocol which contains a private data field (44).

22. The method of claim 21, wherein the message protocol is used to transport the financial data, and the private data field (44) is used to transport the generic data.

23. A method of providing a customer (2, 12) with a home bank terminal interface experience, comprising:
receiving in a financial institution routing system customer identification data from a remote terminal (4, 14);
sending the customer identification data from the financial institution routing system to a server;
receiving in the financial institution routing system home transaction terminal interface data associated with the customer identification data from the server; and
sending the home transaction terminal interface data from the financial institution routing system to a remote terminal (4, 14).

24. The method of claim 23, wherein sending the home transaction terminal interface data from the financial institution routing system to the remote terminal comprises sending a message comprising the home transaction terminal interface data.

25. The method of claim 24, wherein the message further comprises financial transaction data (42).

26. The method of claim 25, wherein the home transaction terminal interface data is included in a private data field (44) of the message.

27. A system for providing a customer (2, 12) of a home bank with a home bank terminal interface experience at a remote transaction terminal (4, 14):
means for receiving customer identification data;
means for identifying a server associated with the customer identification data;
means for requesting home transaction terminal interface data from the server;
means for receiving the home transaction terminal interface data from the server; and
means for providing an interface according to the home terminal interface data at the remote terminal (4, 14).

28. The system of claim 27, wherein the means for receiving customer identification data comprises the remote terminal (4, 14).

29. The system of claim 28, wherein the remote terminal (4, 14) is an ATM.

30. The system of claim 27, wherein the means for identifying the server associated with the customer identification data comprises a database (5, 15).

31. The system of claim 27, wherein the means for requesting the home transaction terminal interface data from the server comprises a financial institution settlement system.

32. The system of claim 31, wherein the means for receiving the home transaction terminal interface data from the server comprises the financial institution settlement system.

33. The system of claim 27, wherein the means for providing the interface according to the home terminal interface data comprises the remote terminal.

34. A system for communicating messages for a customer (2, 12) between a remote transaction terminal (4, 14) and a home data center of a financial institution, comprising:
means for receiving customer information from the customer (2, 12) at the remote transaction terminal (4, 14);
means for automatically identifying the customer (2, 12) and a location of a home data center (8, 16) storing data relating to a home transaction terminal interface for the customer (2, 12) from the customer information;
means for automatically transporting identifying information for the customer (2, 12) from the remote transaction terminal (4, 14) to the home data center through a routing and settlement system (6) of the financial institution; and
means for automatically transporting a message relating to the home transaction terminal interface data for the customer (2, 12) from the home data center (8, 16) to the remote transaction terminal (4, 14) through the routing and settlement system (6), wherein the message includes financial data and generic data for the customer (2, 12).

35. The system of claim 34, wherein the means for receiving customer information from the customer at the remote transaction terminal (4, 14) comprises a bank card reader.

36. The system of claim 34, wherein the means for automatically identifying the customer (2, 12) and the location of the home data center (8, 16) storing data relating to a home transaction terminal interface for the customer (2, 12) from the customer information comprises a database (5, 15) and a processor.

37. The system of claim 34, wherein the means for automatically transporting identifying information for the customer (2, 12) from the remote transaction terminal (4, 14) to the home data center (8, 16) comprises a financial institution routing and settlement system (6).

38. The system of claim 34, wherein the means for automatically transporting the message relating to the home transaction terminal interface data for the customer (2, 12) from the home data center (8, 16) to the remote transaction terminal (4, 14) comprises the routing and settlement system (6).

39. A method of communicating in a financial network comprising:
sending a financial transaction message (40) through a routing system of a financial institution, wherein the financial transaction message (40) comprises a financial transaction data field (42) and a private data field (44), and wherein the private data field (44) comprises customer information.

40. The method of claim 39, wherein the routing system comprises a routing and settlement system (6).

41. The method of claim 39, wherein the routing system comprises electronic funds transfer (EFT) infrastructure.

42. A financial transaction message comprising a financial transaction data field (42) and a private data field (44), wherein the private data field (44) comprises customer information.

43. The message of claim 42, wherein the message comprises an ISO 8583 standard format message.

44. The message of claim 43, wherein the private data field (44) comprises an extended field of the message.

45. A method of communicating in an internet-based transaction comprising:
providing a control applet to a web merchant site (54),
providing to a customer (62) a means for providing internet payments capable of communicating with a computer network; and
receiving a message comprising private data from the web merchant site (54),
wherein the private data comprises secure customer information provided to the web merchant site (54) by the customer in response to prompting by the command applet.

46. The method of claim 45, wherein the means for providing internet payments comprises a smart card (64).

47. The method of claim 46, wherein the means for providing internet payments further comprises a smart card reader.

48. The method of claim 45, wherein the means for providing internet payments comprises at least one of the following: personal computer, ATM card, and ATM card reader.

49. The method of claim 45, wherein the applet is provided by the web merchant site (54) to the customer (62).

50. The method of claim 45, wherein the computer network comprises the internet (56).
